# EUROPEAN PATENT APPLICATION

(11) **EP 2 062 640 A1**
(43) Date of publication of application: **27.05.2009**
(21) Application number: 07022863.0
(22) Date of filing: 26.11.2007
(51) Int. Cl.: B01J 8/02, B01J 19/00, F28D 9/00

(54) **Chemical reactor with plate heat exchange unit**

(71) Applicant: METHANOL CASALE S.A., 6900 Lugano-Besso (CH)
(72) Inventor: Rizzi, Enrico, 22070 Casnate con Bernate (CO) (IT); Filippi, Ermanno, 6976 Castagnola (CH); Tarozzo, Mirco, 6853 Ligornetto (CH)
(74) Representative: Zardi, Marco

(57) **Abstract**

An isothermal chemical reactor (1) is described comprising a plate (30) heat exchange unit (12), immersed in a catalytic bed (7) and destined to heat or cool the reagents in order to maintain the reaction temperature in a predetermined range; said plates (30) are formed by two flat walls (31, 32) and longitudinal spacers (33), with obtainment of parallel channels (34) for the circulation of a heat exchange fluid.

## Description

### Field of application

In its most general aspect, the invention relates to the technical field of chemical reactors internally equipped with a plate heat exchange unit or plate heat exchanger.

The invention is applicable, as a non-limiting example, to isothermal or pseudo-isothermal chemical reactors for exothermic or endothermic heterogeneous reactions, equipped with an internal heat exchanger immersed in a catalytic layer, or to reactors equipped with an internal heat exchanger which in operating conditions is immersed in a fluid.

### Prior art

Different types of chemical reactors are known equipped with at least one internal heat exchanger, adapted to provide or remove heat from the chemical reaction which is carried out in the reactor itself.

A first example is represented by the so-called isothermal or pseudo-isothermal reactors, generally comprising a heat exchanger, immersed in a catalytic layer, with the task of removing heat from the reagents, in case of exothermic chemical reaction, or provide heat in case of endothermic reaction, in order to maintain the reaction temperature in an optimal efficiency range. Isothermal reactors are employed, among others, in methanol synthesis plants.

Another example of a chemical reactor of the considered type is the carbamate condenser in a urea production plant.

A further example is represented by the so-called *shift converter* reactors, where a synthesis gas obtained by partial oxidation of methane gas and containing carbon monoxide is treated in order to convert part of the carbon monoxide into carbon dioxide. Reactors of this type are employed, among others, in processes for the production of ammonia from nitrogen and hydrogen obtained from natural gas.

In the chemical reactors of the considered type it is known to provide a plate type heat exchanger essentially comprising a plurality of box-shaped and flattened bodies, of parallelepiped shape, called "plates". Said plates are essentially formed by two rectangular walls, connected with each other at least along the perimeter, so to define an internal passage chamber of a heat exchange fluid. Indirect heat exchange occurs between an external fluid, in contact with the external surfaces of the plates, and the fluid circulating inside the plates themselves. According to the needs, the aforesaid internal heat exchange fluid can be the same flow of reagents or reaction products (for example, obtaining a preheating of the reagents), or a fluid (such as water, vapour, melted salt, etc.) destined only for heat exchange not taking part in the chemical reaction.

A particularly advantageous plate type heat exchanger for use in chemical reactors is disclosed in EP-A-1705445, and comprises so-called "swelled" plates, i.e. formed by two flat metal sheets joined by a perimeter welding and possibly by other welding points, and subjected to a cycle of high pressure hydraulic swelling (400 - 500 bars, for example) with obtainment of the internal fluid passage chamber between the two sheets.

It must be noted that, in the field of the chemical reactors of the considered type, there is a strong incentive to use plate type heat exchangers that ensure advantages such as the large exchange surface with respect to size, the relatively limited cost and the ease of mounting in the reactor.

The chemical reactors with plate type heat exchange, nevertheless, may have some technical limitations and still need of improvement.

Firstly, there is the need to reduce as much as possible the head loss inside the exchanger. Such head loss, especially in large capacity plants, can cause considerable energy consumption of auxiliary items (circulation pumps).

Moreover, the use in a chemical reactor of exchangers with "swelled" type plates, although advantageous for many reasons, involve some technical limitations which have not yet been overcome. This type of exchanger, in fact, is not adapted to withstand high pressure differences between the plate interior, where the heat exchange fluid circulates, and the outside the plates themselves, subjected to the pressure of the reactor.

Use of swelled plate exchangers is known, for example, in reactors for synthesis of methanol operating at 70-80 bars, but for higher pressure differences (e.g. about 100 bars and beyond) they do not appear to be easily applicable. The resistance to flattening, in fact, is substantially determined by the thickness of the plates and by the pitch of the welding points between the plates themselves; the thickness, however, cannot be increased beyond certain limits since the swelling process would be impossible, and for the same reason it is not possible to diminish the pitch of the welding points (i.e. bring them closer together) beyond a certain limit. It must also be pointed out that the manufacturing process, comprising the abovementioned high pressure hydraulic swelling, is relatively costly.

The above-illustrated problems have up to now prevented or limited the diffusion of the plate heat exchangers in chemical reactors operating at very high pressure and/or in aggressive environments.

### Summary of the invention

The problem underlying the present invention is to devise and provide a reactor equipped with a plate heat exchange unit adapted to solve the drawbacks and limits of the prior art mentioned above.

The invention, in particular, is aimed to reduce the head load inside the heat exchange unit of the reactor, and to allow effective operation of the heat exchange unit under high pressure differences between plate interior and exterior and/or in corrosive environment.

The problem is solved with a chemical reactor comprising at least one plate heat exchange unit, arranged to make a heat exchange between a fluid inside the unit, flowing through said plates, and a fluid outside said unit and contained in said reactor, characterised in that said plates of the heat exchange unit each comprise:
- a first flat wall and a second flat wall, substantially two-dimensional, said walls being parallel to and spaced from each other;
- a plurality of internal spacer elements, connecting said first flat wall to said second flat wall with the obtainment of a plurality of parallel channels, defined between said first and said second wall for the passage of said internal fluid.

With the term substantially two-dimensional walls, it is intended that said walls have two dimensions, respectively length and width, significantly greater (for example by one or two order of magnitude) than the third dimension, or the thickness.

The flat walls have external surfaces in communication with reactor interior, destined to be in contact with the external fluid; the opposite inner surfaces of the plates are facing each other, spaced by said spacer elements, and are in contact with the internal fluid circulating in the plates themselves.

According to a first embodiment of the invention, the spacer elements are extended without interruption in each plate, with obtainment of parallel channels, isolated from each other, between said first and second wall.

In a second embodiment of the invention, the spacer elements of the plates have interruptions which create fluid passages between the channels, with flow equalisation function.

The aforesaid spacer elements are, according to one embodiment of the invention, longitudinal, i.e. extended along the greatest dimension of the plates. In other equivalent embodiments, however, the spacers can be transverse with respect to the prevailing extension direction of the plates.

According to preferred structural aspects, said first and said second flat wall are substantially formed by respective flat metal sheets. The spacer elements have a solid cross section, preferably rectangular, with the obtainment of rectangular section channels, having height equal to the thickness of said spacers and width equal to the opening between two adjacent spacer elements.

Two additional spacer elements can be provided along the longitudinal perimeter edges of the walls, for the lateral sealing of the plates.

Preferably, the spacer elements are made with steel-plate strips, of appropriate thickness equal to the desired height for the internal fluid circulation channels, and said spacer elements are welded with laser process or are connected by means of brazing.

Advantages of the invention are the following: the mechanical strength of the plates is very high, and can be virtually increased as desired. In fact, it is possible to obtain stronger plates by increasing the thickness of the flat walls and/or decreasing the distance (pitch) between the spacer elements. Thus the plates can withstand very high pressure differences between the inside and outside.

It was moreover found that head losses of the plate configuration according to the invention, are lower than head losses of swelled plates.

A further advantage is that external surface of the plates, contacting the external fluid, can be perfectly smooth. A smooth external surface can facilitate the discharge of the catalyst and can also be advantageous since it does not have starting points for corrosion.

Moreover, all advantages deriving from the use of plate type exchangers in isothermal reactors are maintained, such as the high exchange surface, low cost and easy installation.

An aspect of the invention, therefore, consists of the use of a plate type heat exchange unit of the above-described type, in substitution of the traditional tube type exchangers, in applications where the plate type exchanger still has unresolved drawbacks.

The characteristics and advantages of the present invention will be more evident from the following description of preferred indicative and non-limiting embodiment examples, with reference to the attached figures.

### Brief description of the figures

Fig. 1 schematically shows a section plane of a plate type isothermal chemical reactor, according to an embodiment of the invention.
Fig. 2 schematically shows a heat exchange plate of the exchanger of the reactor of Fig. 1.
Fig. 3 shows a cross section of the plate of Fig. 2.
Fig. 4 schematically shows a section plane of a heat exchange plate of the reactor of Fig. 1.
Fig. 5 refers to a further embodiment of the heat exchange plates.

### Detailed description

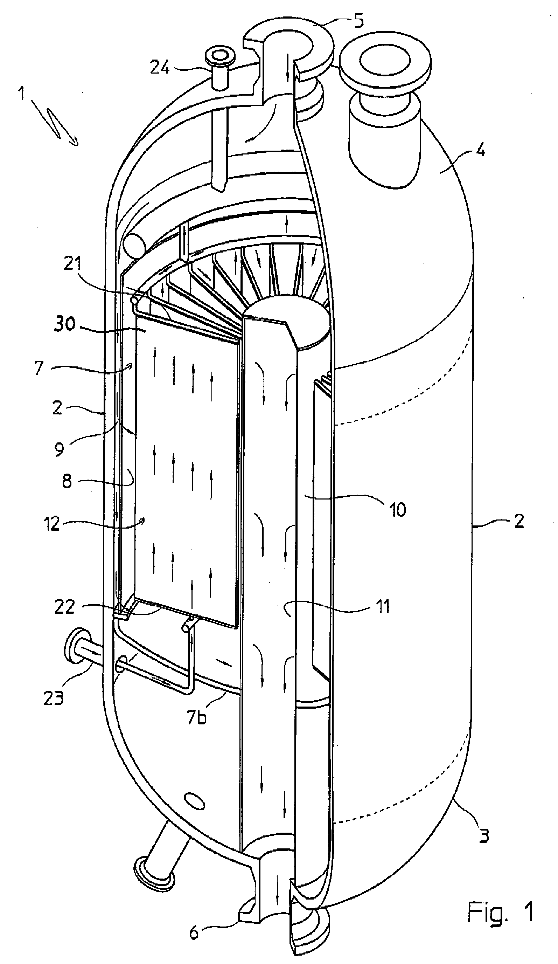

With reference to Fig. 1, an isothermal chemical reactor 1 is shown which comprises a cylindrical shell 2, with vertical axis, a lower end 3 and an upper end 4, respectively equipped with a flange 5 for the inlet of the reagents and a flange 6 for the outlet of the reaction products.

The example of Fig. 1 refers to a catalytic reactor, for example for the synthesis of methanol, which comprises a catalytic rack 7, of substantially cylindrical and annular structure. Said catalytic rack 7 is essentially composed of an external cylindrical wall 8, an internal cylindrical wall 10 and an annular bottom 7b. The outer wall 8 defines, with the jacket 2, an interspace 9 of reduced width. The rack 7 is destined to contain a mass of an appropriate catalyst, not shown.

Said outer wall 8 and said inner wall 10 are perforated in order to allow the passage of the reagent gases from the interspace 9 into the rack 7, and to allow the passage of the gaseous reaction products from the rack 7 to a central duct 11, which constitutes the collector of said reaction products.

The reactor further comprises a plate heat exchange unit, indicated with 12 in its entirety, contained in the rack 7 and immersed in the catalyst.

More specifically, said heat exchange unit 12 comprises a plurality of heat exchange plates 30, which in the example are arranged in a ray-like manner, i.e. radially.

A heat exchange fluid, for example water, can be fed to each plate 30 by means of appropriate circulation means, represented in the example by respective fluid inlet dispensers 22 and fluid outlet collectors 21. The dispensers 22 and collectors 21 are connected with appropriate tubing inside the reactor 1 and inlet/outlet flanges 23 and 24.

Said heat exchange fluid, or internal fluid, flows through a plurality of channels defined inside the plates 30.

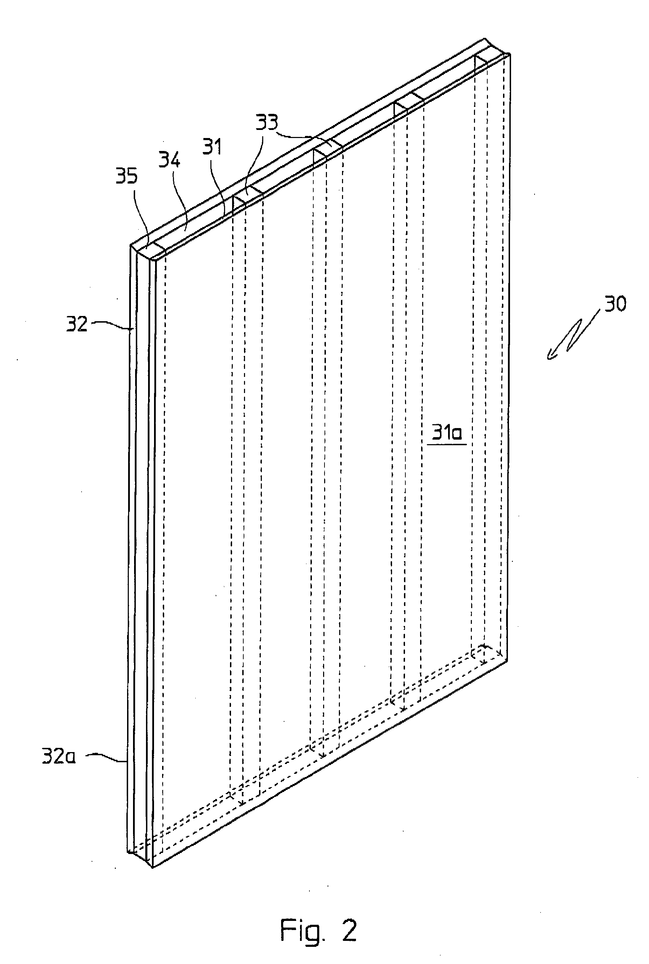

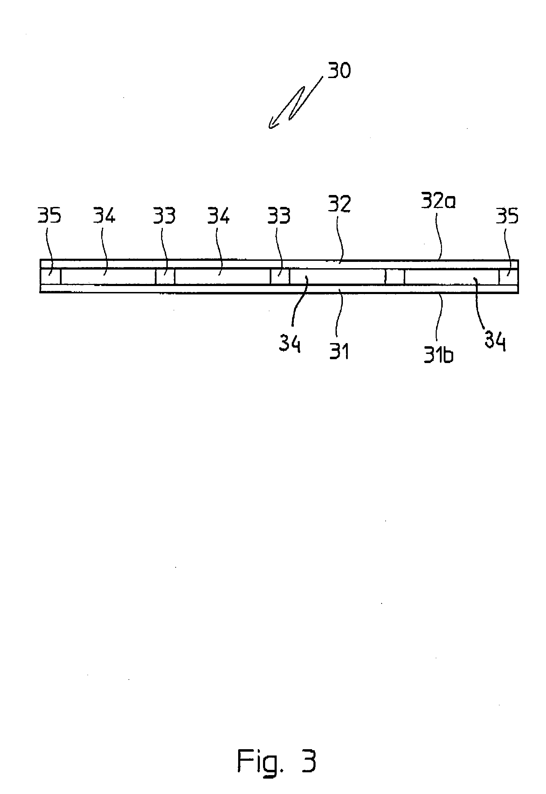

With reference to the embodiment of Figs. 1-4, each plate 30 essentially comprises a first flat wall 31 and a second flat wall 32, parallel to each other, and a plurality of longitudinal spacers 33, which connect said first wall 31 to said second flat wall 32, with the obtainment of channels 34 for said internal fluid.

The walls 31 and 32 are substantially two-dimensional, that is they have length and width significantly greater than the thickness. For example, the length is several metres; the width is about one metre; the thickness is some millimetres.

Preferably, the spacers 33 have a solid cross section, still more preferably rectangular, as in the figures, with the obtainment of substantially rectangular section channels 34, having height equal to the thickness of said spacers and width equal to the distance (pitch) between two adjacent spacers 33.

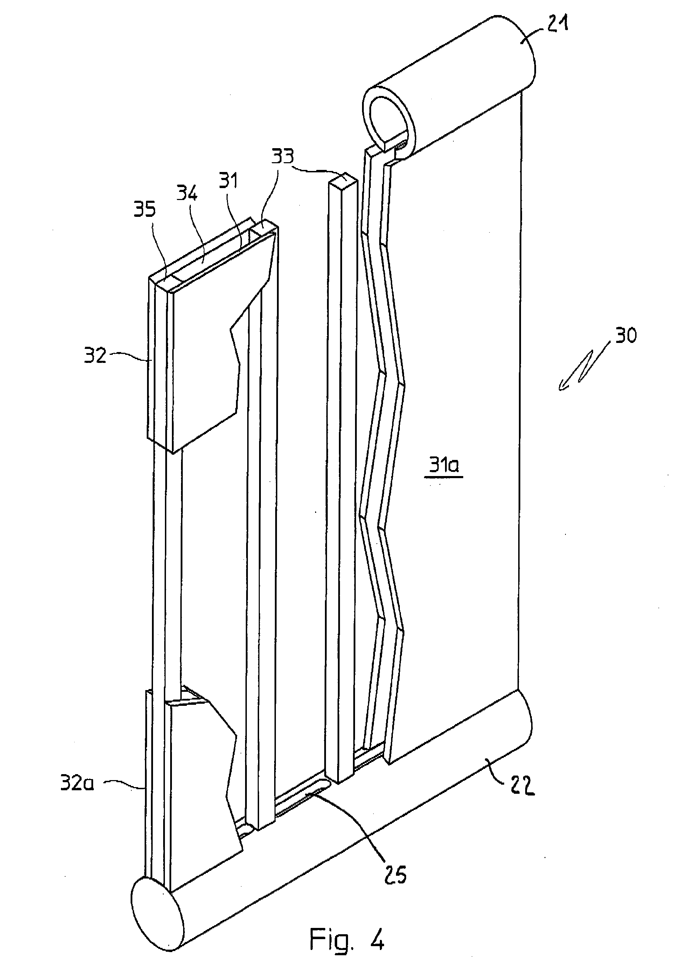

In the represented embodiment, the spacers 33 connect the walls 31 and 32 without interruption, with the obtainment of channels 34 parallel and isolated from each other, defined by the inner surfaces of the walls 31, 32 and by the continuous lateral surfaces of the spacers 33. In other words, along the longitudinal extension of the plates 30, the fluid current flowing into one of the channels 34 cannot mix with fluid flowing through adjacent channels (Fig. 4).

Two additional spacers 35 are provided along the longitudinal perimeter edges of the walls 31 and 32, for the lateral sealing of the plate 30. Such spacers 35 can be identical to the spacers 33.

The walls 31 and 32, in a preferred embodiment, are formed from respective flat metal sheets, and the spacers 33 are represented by plate strips, of appropriate thickness equal to the height desired for the internal fluid circulation channels 34.

A preferred manufacturing process provides for welding the spacer elements 33, 35 to the walls 31 and 32 with a laser process. In particular cases, such as the presence of a corrosive environment in the reactor, i.e. outside the plates, the external welds of the plate body 30 can however be manually executed with weld metal, in order to avoid the formation of interstices which could trigger corrosion.

As shown in the figures, the external surfaces of the walls 31 and 32, indicated respectively as 31a and 32a, are the external surfaces of the plate 30 itself, and are destined to be directly in contact with the external fluid contained in the reactor 1. The opposite internal surfaces of the plates face each other and are in contact with the internal fluid, circulating in the channels 34. The heat exchange thus occurs indirectly, without direct contact between the two fluids.

The surfaces 31a and 32a are preferably smooth. This feature is particularly but not exclusively advantageous in the catalytic reactors. With reference to the example of Fig. 1, the plates 30 with smooth external surface facilitate the discharge and replacement of the catalyst contained in the bed 7.

A unit 12 of the described type, in order to operate with high pressure differences and/or in potentially corrosive environments, is made with the walls 31, 32 and the spacers 33 of the plates 30 in stainless steel or duplex steel. As an example, the walls 31, 32 can have a thickness of several millimetres and the spacers 33 a thickness of about 5 mm.

It is understood that the heat exchange unit according to the invention attains the above-stated objects and, in particular, offers a high resistance to the pressure differences between interior and exterior. It has also been found that, with respect to the plates of swelled type, as defined above, the load losses are reduced. The reduction of the load losses in some cases can be from 1/3 up to 1/10.

In a further (not illustrated) embodiment, the spacer elements 33 are interrupted along their longitudinal extension, with the obtainment of respective fluid passages between the channels 34. The interruption of the spacer elements, and consequent fluid passages between the channels, can be advantageous for an equalisation effect of the flows in the channels 34.

The heat exchange fluid, for example water, is fed to and collected from the plates by means of the dispensers 22 and collectors 21, equipped with openings or slots 25 at the channels 34 (Fig. 4).

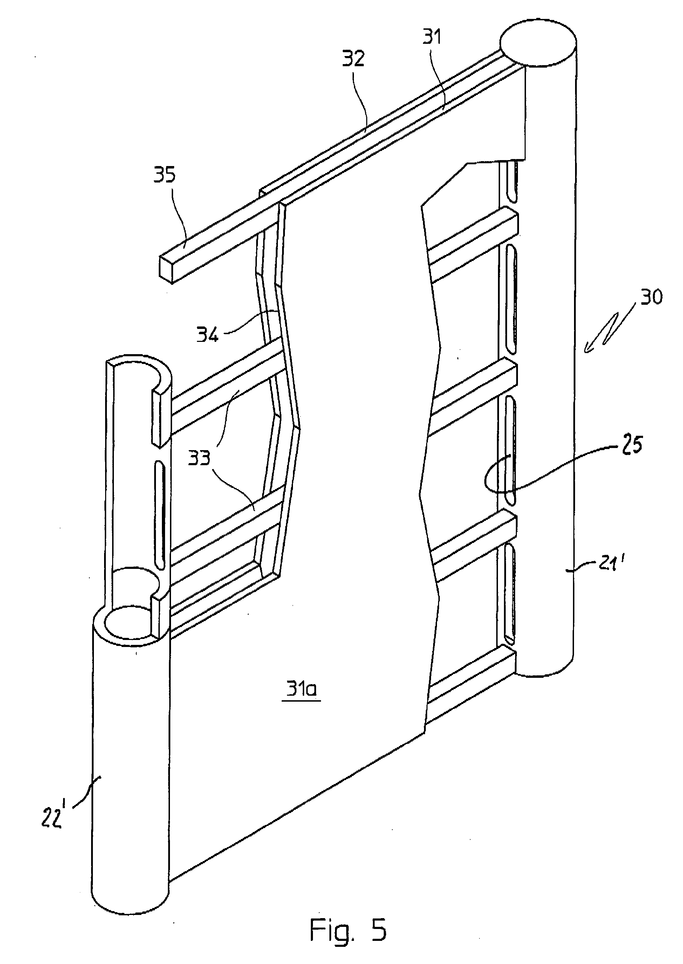

Fig. 5 refers to a further embodiment wherein the spacers 33 of the plates 30 are transversally arranged with respect to the plate 30, with the obtainment of radial channels 34, the other technical characteristics being substantially equivalent to that described above. The supply of the heat exchange fluid is obtained with longitudinal dispensers 22' and collectors 21', equipped with openings 25 as described above.

The embodiment of Fig. 5 is advantageous, for example, in radial reactors where thermal load on the plates (quantity of heat produced or absorbed by the reaction) varies significantly along the radius.

Referring again to Fig. 1, the operation is as follows. Reagents are fed to reactor 1 by flange 5, and radially cross the catalytic reaction zone, from interspace 9 to collector 11. A heat exchange fluid, for example water, is fed to the plates 30, entering and exiting through flanges 23 and 24, respectively. The heat exchange operated by the unit 12, referring for example to an exothermic reaction, cools the catalytic bed and the reaction products, maintaining the reaction temperature in an optimal efficiency range. As is evident to the man skilled in the art, the invention is not limited to the above-described case of isothermal catalytic reactor, but is equally applicable to different chemical reactor types, including shift converters, urea plant reactors, etc.

In equivalent embodiments, the plates 30 of the unit 12 can have an arrangement different from that radial; the unit 12 for example can be of the type with substantially parallel plates.

The internal fluid and the external fluid can also be the same fluid (for example for preheating the reagents with the reaction heat), although a reactor of the above described type is preferred for high pressure reactors, wherein the fluid inside the plates is only destined for heat exchange, and is different from the external (process) fluid.

Finally, it should be noted that the application of the invention is not limited to radial or radial-axial reactors, but is equally advantageous also in isothermal chemical reactors of other type.

## Claims

1. Isothermal chemical reactor (1) comprising at least one internal plate (30) heat exchange unit (12), arranged to provide a heat exchange between a fluid inside the unit (12), flowing through said plates (30), and a fluid outside said unit (12) and contained in said reactor (1), **characterised in that** each of said plates (30) of the heat exchange unit (12) comprises:
- a first flat wall (31) and a second flat wall (32), substantially two-dimensional, said walls (31, 32) being parallel to and spaced from each other;
- a plurality of internal spacer elements (33), connecting said first flat wall (31) to said second flat wall (32), with obtainment of parallel channels (34), defined between said walls (31, 32) for the passage of said internal fluid.

2. Reactor according to claim 1, **characterised in that** said internal spacer elements (33) connect said flat walls (31, 32) without interruption, said parallel channels (34) being isolated from each other.

3. Reactor according to claim 1, **characterised in that** said internal spacer elements (33) have interruptions with obtainment of fluid passages between said parallel channels (34).

4. Reactor according to any one of the preceding claims, **characterised in that** said spacer elements (33) are longitudinal with respect to the plates (30).

5. Reactor according to any one of the claims 1 to 4, **characterised in that** said spacer elements (33) are transverse with respect to the plates (30).

6. Reactor according to any one of the preceding claims, **characterised in that** said spacer elements (33) of the plates (30) of the heat exchange unit (12) have a solid cross-section.

7. Reactor according to claim 6, **characterised in that** said spacer elements (33) have a rectangular section, with obtainment of rectangular section channels (34), having height equal to the thickness of said spacers and width equal to the distance between two consecutive spacer elements (33).

8. Reactor according to any one of the preceding claims, **characterised in that** two further spacer elements (35) are provided along the longitudinal perimeter edges of the walls (31, 32) of each plate (30), for the lateral sealing of the plate (30) itself.

9. Reactor according to any one of the preceding claims, **characterised in that** said walls (31, 32) of the plates (30) have external surfaces (31a, 32a), destined to be in contact with the external fluid, which are substantially smooth.

10. Reactor according to any one of the preceding claims, **characterised in that** said walls (31, 32) and said spacer elements (33, 35) of the plates (30) of the heat exchange unit (12) are joined by means of welding with laser process or by means of brazing.

11. Reactor according to any one of the preceding claims, said reactor being an isothermal or pseudo-isothermal catalytic reactor, comprising a catalytic bed (7) in which said heat exchange unit (12) is immersed.
